(19) Europäisches Patentamt / European Patent Office / Office européen des brevets

(11) **EP 4 432 171 A1**

(12) **EUROPEAN PATENT APPLICATION**

(43) Date of publication:
**18.09.2024  Bulletin 2024/38**

(21) Application number: **23305360.2**

(22) Date of filing: **16.03.2023**

(51) International Patent Classification (IPC):
**G06N 10/40** *(2022.01)*      G06N 10/20 *(2022.01)*
**G06N 20/00** *(2019.01)*

(52) Cooperative Patent Classification (CPC):
**G06N 10/40;** G06N 10/20; G06N 20/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Pasqal**
**91300 Massy (FR)**

(72) Inventors:
• **VIGNOLI, Louis**
  **91300 Massy (FR)**
• **HENRY, Louis-Paul**
  **91300 Massy (FR)**

(74) Representative: **Lavoix**
**2, place d'Estienne d'Orves**
**75441 Paris Cedex 09 (FR)**

(54) **A METHOD FOR DETERMINING THE POSITIONS OF TRAPPING SITES FOR PARTICLES IN A QUANTUM REGISTER**

(57)     The invention relates to a method for determining the positions of trapping sites for particles in a quantum register so as to enable generating several quantum systems able to perform independent quantum calculations in parallel, the method comprising:
- determining particle positions in an allowed register space for forming several quantum systems able to perform independent quantum calculations in parallel, the determination step comprising:
◦ determining an elementary set for the particle pattern,
◦ computing the particle positions in the allowed register space, on the basis of the elementary set,

- determining positions of trapping sites in the allowed register space on the basis of the determined particle positions so as to enable the trapping of particles at the determined particle positions.

FIG.2

**EP 4 432 171 A1**

**Description**

TECHNICAL FIELD OF THE INVENTION

The present invention concerns a method for determining the positions of trapping sites for particles in a quantum register, a method for generating several quantum systems able to perform independent quantum calculations in parallel, and a method for performing independent quantum calculations in parallel with several quantum systems. The present invention also concerns a computer program product and a readable information carrier.

BACKGROUND OF THE INVENTION

There are currently several approaches for building quantum systems with the goal of quantum computation and simulation. One of the approaches is based on neutral atoms. In neutral atom quantum processors, quantum resources are the electronic states of neutral atoms such as Rubidium, which are controlled by laser fields of various wavelength. An example of such a system is described in the article by Loïc Henriet, Lucas Beguin, Adrien Signoles, Thierry Lahaye, Antoine Browaeys, Georges-Olivier Reymond, and Christophe Jurczak. Quantum computing with neutral atoms. Quantum, 4:327, September 2020. ISSN 2521-327X. doi:10.22331/q-2020-09-21-327. Depending on the application, it can be useful to perform different calculations in parallel. For example, this could help improving the repetition rate of the quantum devices (e.g., the frequency at which quantum computations can be performed).

However, the parallelization is not easy to implement due to the possible interactions between the quantum systems, which can lead to calculation errors.

SUMMARY OF THE INVENTION

Hence, there exists a need for a method rendering easier and more accurate the implementation of quantum computations in parallel.

To this end, the invention relates to a method for determining the positions of trapping sites for particle in a quantum register so as to enable generating several quantum systems able to perform independent quantum calculations in parallel, the method comprising the following steps:

- obtaining input data comprising:

  ∘ an allowed register space,
  ∘ relative positions of particles forming a particle pattern,
  ∘ a radius parameter

- determining particle positions in the allowed register space for forming several quantum systems able to perform independent quantum calculations in parallel, the determination step comprising:

  ∘ determining an elementary set for the particle pattern, the determination of the elementary set comprising:

    ▪ determining a round shape for each relative positions of particles of the particle pattern on the basis of the radius parameter, each round shape being a disk or a sphere, the round shapes being centered on the corresponding position and having a radius equal to the radius parameter,
    ▪ determining an interaction geometry which is the union of all the round shapes determined for the relative positions of particles of the particle pattern,
    ▪ determining an approximated enclosing shape of minimum area around the interaction geometry, the elementary set being the relative positions of particles forming the particle pattern enclosed in the determined enclosing shape,

  ∘ computing the particle positions in the allowed register space, on the basis of the elementary set, so as to form several quantum systems able to perform independent quantum calculations in parallel,

- determining positions of trapping sites in the allowed register space on the basis of the determined particle positions so as to enable the trapping of particles at the determined particle positions.

The method according to the invention may comprise one or more of the following features considered alone or in any combination that is technically possible:

- the computing of the particle positions comprises the determination of a tiling set obtained by concatenating two elementary sets which are symmetrical to each other by central symmetry, and filling the allowed register space with as many tiling sets as possible;
- the filling of the allowed register space with as many tiling sets as possible comprises arranging the tiling sets next to each other to obtain an array of tiling sets, and rotating and/or translating the array of tiling sets with respect to the shape of the allowed register space so as to fill the allowed register space with as many tiling sets as possible;
- a buffer zone has been added around each elementary sets concatenated to obtain the tiling set, so as to increase the distance between the particle positions belonging to different elementary sets;
- the input data also comprises:

  ◦ a number T of trapping site(s) per particle, T being superior or equal to one,
  ◦ a minimal distance between two trapping sites,
  the determination of the positions of the trapping sites comprising:

    ◦ positioning a trapping site at each determined particle position,
    ◦ determining free space in the allowed register space after filling the allowed register space with round shapes centered on the determined particle positions and whose radius is the minimal distance, each round shape being a disk or a sphere, and
    ◦ positioning the remaining trapping sites in the free space while updating the free space after the positioning of each trapping site;

- the remaining trapping sites are positioned on the basis of a K-means clustering algorithm so as to position one remaining trapping site per Voronoi cell of the computed K-means clustering, as close as possible to the centroid of the corresponding Voronoi cell;
- the positioning of the remaining trapping sites is repeated until all the trapping sites have been positioned in the free space or until the free space does not allow the positioning of an additional trapping site;
- when the free space does not allow the positioning of an additional trapping site and there is at least one remaining trapping site, at least one tiling set is removed from the allowed register space, enabling to reduce the requested number of trapping sites;
- the particles are any particles undergoing effective two-body isotropic interactions, the particles being preferably neutral atoms, such as Rubidium atoms or Strontium atoms;
- the radius parameter is a distance parameter capturing an effective two-body isotropic typical interaction range, preferably the interaction range being relative to a Van der Wall interaction;

The invention relates to a method for generating several quantum systems able to perform independent quantum calculations in parallel, the method comprising the steps of the method for determining the positions of trapping sites as previously described and the following steps:

- generating trapping sites at the determined positions of the trapping sites in the quantum register, and
- loading and rearranging the particles in the trapping sites so as to obtain several quantum systems able to perform independent quantum calculations in parallel.

The invention relates to a method for performing independent quantum calculations in parallel with several quantum systems generated according to the generation method as previously described.

The invention also concerns a computer program product comprising a readable information carrier having stored thereon a computer program comprising program instructions, the computer program being loadable onto a data processing unit and causing a method as previously described to be carried out when the computer program is carried out on the data processing unit.

The invention also concerns a readable information carrier on which a computer program product as previously described is stored.

BRIEF DESCRIPTION OF THE DRAWINGS

The invention will be easier to understand in view of the following description, provided solely as an example and with reference to the appended drawings in which:

- Figure 1 is a schematic view of an example of a calculator configured for implementing a method for determining the positions of trapping sites for particles in a quantum register,

- Figure 2 is an organigram of an example of different steps of a method for determining the positions of trapping sites for particles in a quantum register,
- Figure 3, is an example of a pattern of particles with a disk corresponding to each particle, the union of the disks being an interaction geometry,
- Figure 4, is an example of different shapes (a triangle, a quadrilateral, and a centrally symmetric hexagon) enclosing the interaction geometry, in particular, these shapes tile the plane of the register space, and their geometry attempt to minimize their area,
- Figure 5, is an example of a tiling set obtained by concatenating two elementary sets which are symmetrical to each other by central symmetry,
- Figure 6, is an example of an arrangement of the tiling sets next to each other to form an array of tiling sets (here two dimensional),
- Figure 7, is an example of different geometries of allowed register space,
- Figure 8, is an example of a triangular register space which is tiled with various orientations and/or translations with respect to the array of tiling sets, allowing modifying the number of enclosed tiling sets,
- Figure 9, is an example of a buffer zone added around each elementary sets concatenated to obtain a tiling set,
- Figure 10, is an example of a circular arrangement of elementary sets enabling to arrange the elementary sets symmetrically around the center of the register space, and
- Figure 11, is a schematic example of a quantum processor.

## DETAILED DESCRIPTION OF SOME EMBODIMENTS

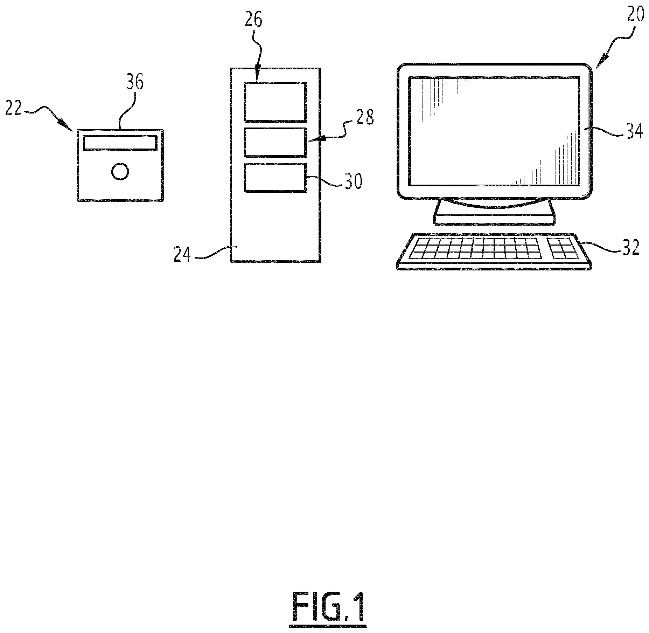

A computer 20 and a computer program product 22 are illustrated in figure 1.

More generally, the calculator 20 is a computer or computing system, or similar electronic computing device adapted to manipulate and/or transform data represented as physical, such as electronic, quantities within the computing system's registers and/or memories into other data similarly represented as physical quantities within the computing system's memories, registers or other such information storage, transmission or display devices.

The calculator 20 interacts with the computer program product 22.

As illustrated on figure 1, the calculator 20 comprises a processor 24 comprising a data processing unit 26, memories 28 and a reader 30 for information media. In the example illustrated on figure 1, the calculator 20 comprises a human machine interface 32, such as a keyboard, and a display 34.

The computer program product 22 comprises an information medium 36.

The information medium 36 is a medium readable by the calculator 20, usually by the data processing unit 26. The readable information medium 36 is a medium suitable for storing electronic instructions and capable of being coupled to a computer system bus.

By way of example, the information medium 36 is a USB key, a floppy disk, an optical disk, a CD-ROM, a magneto-optical disk, a ROM memory, a memory RAM, EPROM memory, EEPROM memory, magnetic card or optical card.

On the information medium 36 is stored the computer program 22 comprising program instructions.

The computer program 22 is loadable on the data processing unit 26 and is adapted to entail the implementation of a method for determining the positions of trapping sites for particles in a quantum register, when the computer program 22 is loaded on the processing unit 26 of the calculator 20.

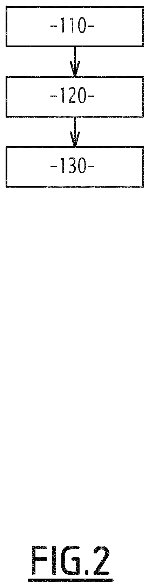

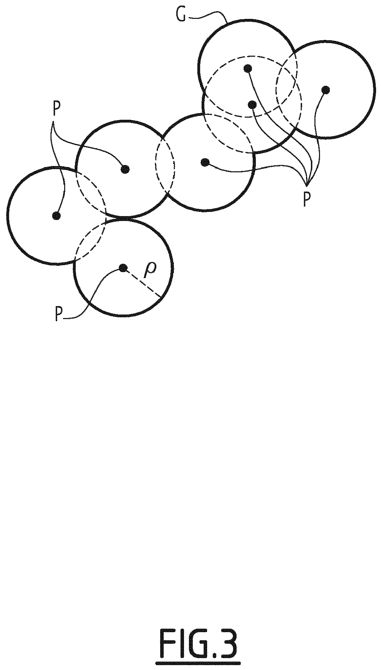

A method for determining the positions of trapping sites for particles in a quantum register so as to enable generating several quantum systems able to perform independent quantum calculations in parallel, will now be described with reference to the organigram of figure 2, and to figures 3 to 8, which illustrate examples of some steps of this method.

By the term "quantum register", it is understood a region of space where to trap particles so as to generate quantum systems.

By the term "independent", it is understood that the possible interactions between the particles of different quantum systems are too low to have an impact on the calculations. In other words, the distance between the different quantum systems is sufficient so that there is no or very low interactions between the particles of the quantum systems.

By the term "in parallel", it is understood that the calculations are performed at the same time.

The particles meant to be trapped in the trapping sites are any particles undergoing effective two-body isotropic interactions.

Preferably, the particles are atoms, and in particular electrically neutral atoms. Neutral atoms are, for example, Rubidium atoms, or Strontium atoms.

The determination method comprises a step 110 of obtaining input data. The obtention step 110 is for example implemented by the computer 20 interacting with the computer program product 22, that is to say is computer-implemented. In this step 100, the term "obtaining" has also the meaning of "providing" or "receiving".

The input data are for example set by an operator.

The input data comprise at least:

- an allowed register space $S_R$,
- relative positions $P_R$ of particles forming a particle pattern, and
- a radius parameter $\rho$.

The allowed register space $S_R$ defines the area of the quantum register. The allowed register space $S_R$ is for example delimited by a square or a cube, a quadrilateral or parallelepiped, or a circle or a sphere.

The particle pattern is a two or three dimensional pattern.

The radius parameter $\rho$ is a distance, which is for example chosen by an operator, informed by the underlying physics of the system.

In particular, the radius parameter $\rho$ is a distance parameter capturing an effective two-body isotropic typical interaction range.

In the case of trapped Rubidium atoms evolving in a groundstate-Rydberg mode, it is the van der Waals interaction. The range of the blockade effect that arises from this interaction is of the order of the Rydberg blockade radius $r_b$, given by the following formula:

$$r_b = \left(\frac{C_6}{\hbar\Omega}\right)^{\frac{1}{6}} \qquad (1)$$

Where:

- $C_6$ is a numerical coefficient that depends on the selected atomic states,
- $\hbar$ is the Planck constant, and
- $\Omega$ relates to the amplitude of the laser field.

So, in this example, a good choice is $\rho \geq \dfrac{r_b}{2}$.

In the case of trapped Rubidium atoms evolving in a Rydberg-Rydberg mode, the interaction is in $r^3$ and not $r^6$, so the typical range of the interaction is not captured by the Rydberg blockade radius $r_b$ but rather by $r_{XY}$, given by the following formula:

$$r_{XY} = \left(\frac{C_3}{\hbar\Omega}\right)^{\frac{1}{3}} \qquad (2)$$

Where:

- $C_3$ is a numerical coefficient that depends on the selected atomic states, and
- the other references are the same as those described for the previous equation.

So, in this example, $\rho$ would thus be chosen differently, greater than $\dfrac{r_{XY}}{2}$ for example. Preferably, the input data also comprise:

- a number $T$ of trapping site(s) per particle, $T$ being superior or equal to one, advantageously broadly comprised between one and two (so as to enable the rearrangement of the loaded particles to generate the quantum system), and
- a minimal distance $d_{min}$ between two trapping sites.

The determination method comprises a step 120 of determining particle positions $P_P$ in the allowed register space $S_R$ for forming several quantum systems able to perform independent quantum calculations in parallel. The determination step 120 is for example implemented by the computer 20 interacting with the computer program product 22, that is to say is computer-implemented.

The determination step 120 comprises the determination of an elementary set $S_E$ for the particle pattern. The elementary set $S_E$ is the relative positions $P_R$ of particles forming the particle pattern which are enclosed in an enclosing shape. The enclosing shape is a two dimensional shape for a 2D pattern, and a three dimensional shape for a 3D pattern.

In an example of implementation, the determination of the elementary set $S_E$ comprises the determination of a round shape for each relative positions $P_R$ of particles of the particle pattern on the basis of the radius parameter $\rho$. The round shape is a disk for two dimensional particle patterns and a sphere for three dimensional particle patterns. The round shapes are centered on the corresponding position $P_R$ and have the same radius which is the radius parameter $\rho$.

Then, the determination of the elementary set $S_E$ comprises determining an interaction geometry G which is the union of all the round shapes determined for the relative positions $P_R$ of particles of the particle pattern. Figure 3 is an example of an interaction geometry G obtained for a given particle pattern when the round shapes are disks. In this example, each round shape have a part in common with at least another round shape. However, in a variant, the round shapes can be disjoint.

Hence, in the case of atoms, for a given atomic pattern in a quantum processing unit operating in Rydberg mode, a surrounding area of the atoms positions is forbidden to other atoms to make non-interacting copies.

Finally, the determination of the elementary set $S_E$ comprises determining an approximated enclosing shape S of minimum area around the interaction geometry G. The elementary set $S_E$ is the relative positions $P_R$ of particles forming the particle pattern enclosed in the determined enclosing shape S.

The enclosing shape S is a shape enabling to produce a tiling of the plane/space.

The enclosing shape S is typically a polytope (which in 2D is a polygon and in 3D is a polyhedron).

Preferably, for a given shape enabling to tile the plane/space, the geometry of the shape is optimized to minimize its area while enclosing the interaction geometry G so as to obtain the enclosing shape S.

In an example, the enclosing shape S is a triangle in 2D or triangular prism in 3D, or a quadrilateral in 2D or parallelepiped in 3D, as these shapes enable to till the plane/space.

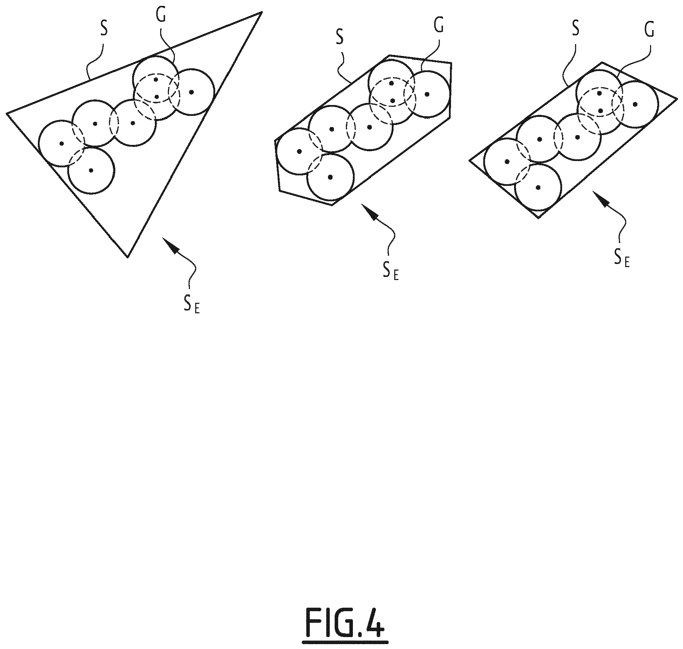

Figure 4 illustrates an example of different shapes (a triangle, a quadrilateral, and a symmetric hexagon) of minimal area enclosing the interaction geometry G of figure 3.

The determination of the minimum area for a given shape S is for example done using an algorithm as described in the article Alok Aggarwal, J. S. Chang, and Chee K. Yap. "Minimum area circumscribing Polygons". In: The Visual Computer 1.2 (Aug. 1985), pp. 112-117. ISSN: 1432-2315. DOI:10.1007/ BF01898354. In this example, the shape is a quadrilateral. However, this method could be applied to other types of shapes, for example a triangle.

In a variant, the enclosing shape S is another type of polytope which is for example chosen depending on the shape of the interaction geometry G so as to tile the plane/space, enclose the interaction geometry G and minimize its area.

The determination step 120 also comprises computing the particle positions $P_P$ in the allowed register space $S_R$, on the basis of the elementary set $S_E$, so as to form several quantum systems able to perform independent quantum calculations in parallel.

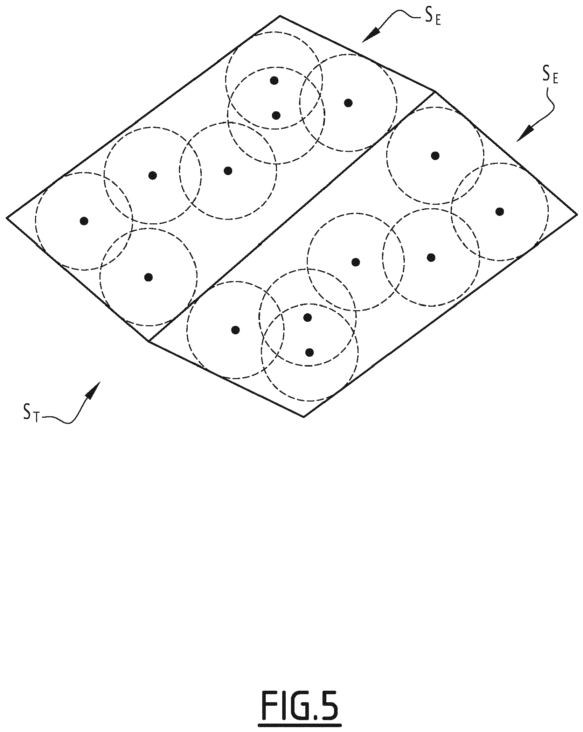

In an example of implementation (in particular when the enclosing shape S is a quadrilateral or a triangle), the computing of the particle positions $P_P$ comprises the determination of a tiling set $S_T$ obtained by concatenating two elementary sets $S_E$ which are symmetrical to each other by central symmetry, and filling the allowed register space $S_R$ with as many tiling sets $S_T$ as possible. Figure 5 illustrates an example of the concatenation of two elementary sets $S_E$ having the shape of a quadrilateral to form a tiling set $S_T$ having the shape of a hexagon. In particular, this example of implementation is particularly well suited for maximizing the number of copies in the register space $S_R$, in order to eventually increase the effective computational repetition rate.

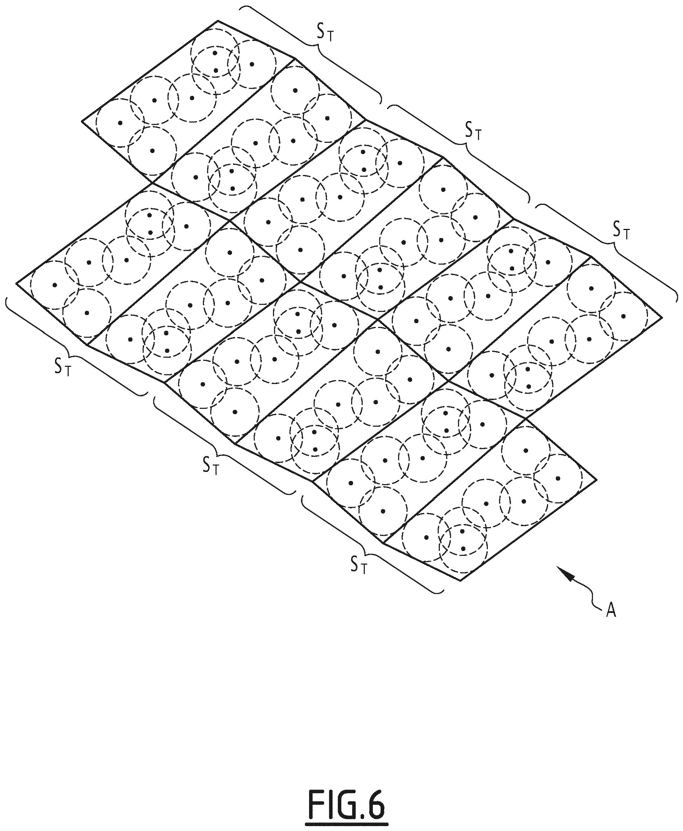

Preferably, the filling of the allowed register space $S_R$ with as many tiling sets $S_T$ as possible comprises arranging the tiling sets $S_T$ next to each other to obtain an array A of tiling sets $S_T$. Figure 6 illustrates an example of a tiling of a two dimensional space with the tiling sets $S_T$. In this example, the tiling set $S_T$ has the shape of an hexagon, and the array A of tiling sets $S_T$ is easily obtained by translation.

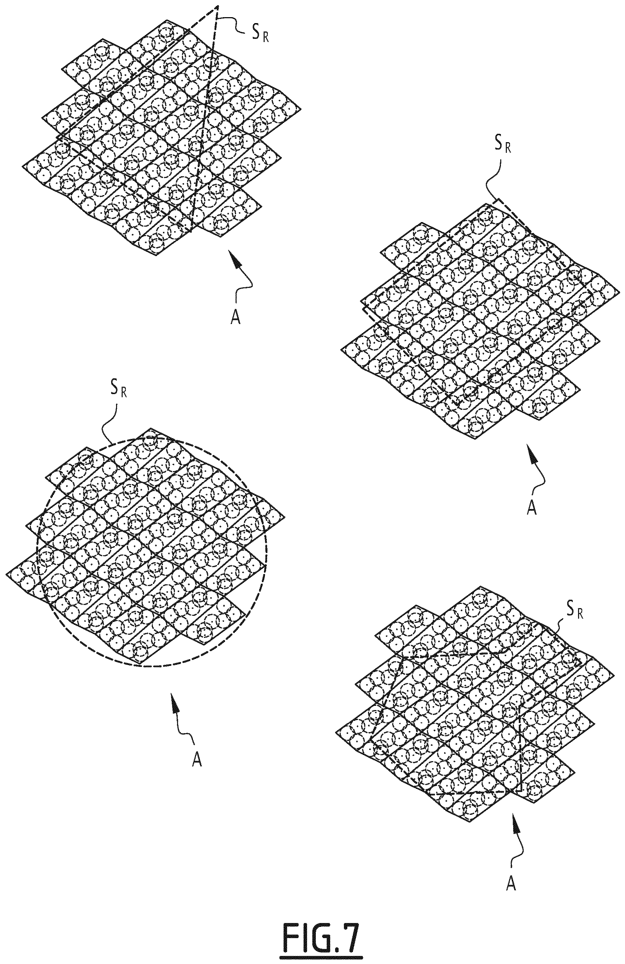

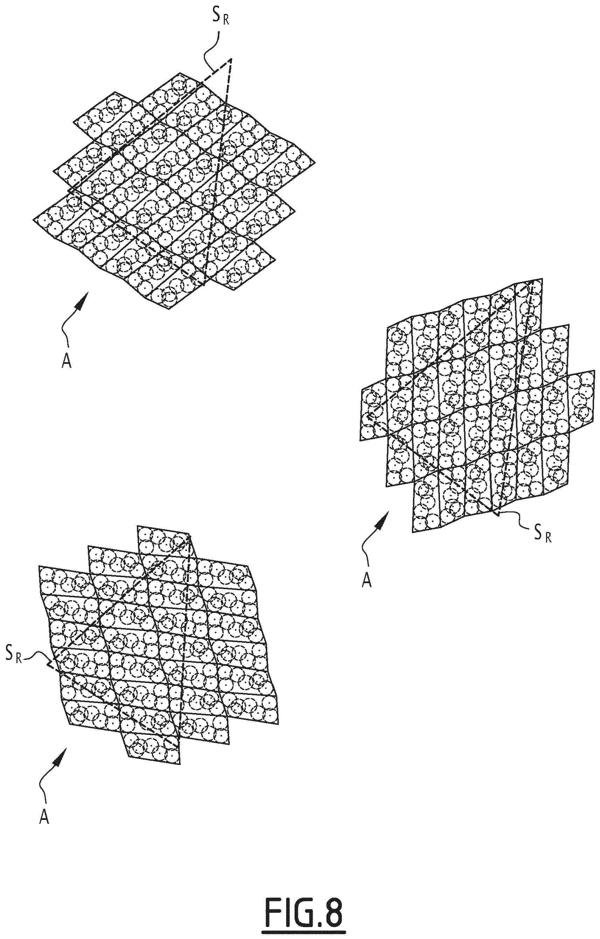

Then, the filling of the allowed register space $S_R$ with as many tiling sets $S_T$ as possible comprises rotating and/or translating the array A of tiling sets $S_T$ depending on the shape of the allowed register space $S_R$ so as to fill the allowed register space $S_R$ with as many tiling sets $S_T$ as possible. Figure 7 illustrates different geometries (triangle, rectangle, circle...) of allowed register space $S_R$. Figure 8 is an example of different orientations and/or translations of an array A of tiling sets $S_T$, allowing modifying the number of enclosed tiling sets $S_T$ in a triangular register shape $S_R$.

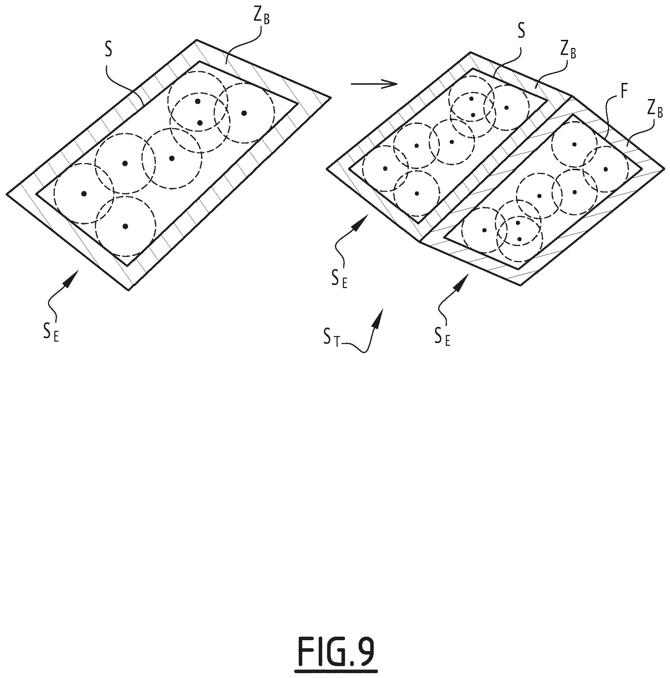

Optionally, a buffer zone ZB has been added around each elementary sets $S_E$ concatenated to obtain the tiling set $S_T$. The dimensions of the buffer zone ZB are for example part of the input data. This enables to increase the distance between the particle positions $P_P$ belonging to different elementary sets $S_E$. In the case of atoms, this enables to further suppress the interactions between copies of the atoms. Figure 9 illustrates an example of a buffer zone ZB added around each elementary set $S_E$.

In another example of implementation, other quantities than the repetition rate could be optimized while tiling the register space $S_R$ with the elementary sets $S_E$.

For example, considering the case of an inhomogeneous driving field over the register space $S_R$ as an example, a desirable layout would be one that places copies such that each of them experiences a similar drive.

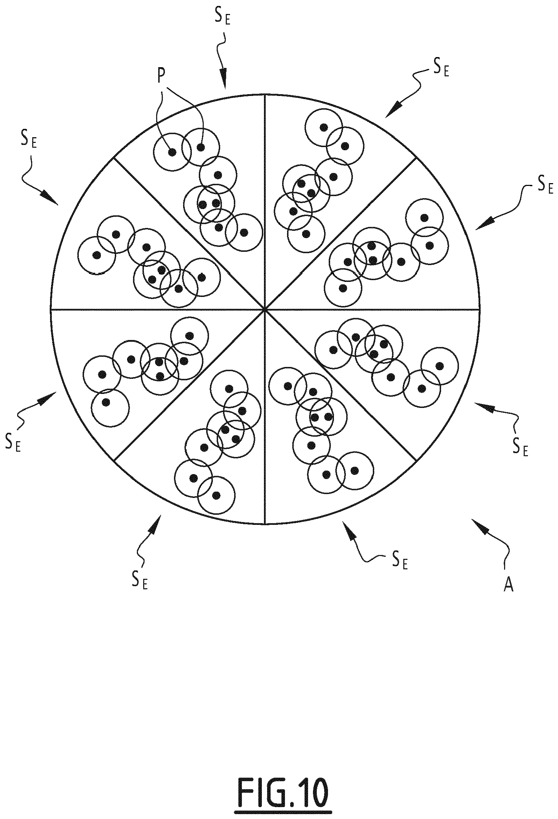

In the case of a Gaussian profile centered on the register center, the layout of figure 10 is an example of a possibility of tiling that would fulfill this condition. Indeed, because the copies are arranged symmetrically around the center of the register, they all "feel" the driving laser field the same way, experiencing the same dynamics if we considered that the copies are independent.

Hence, in this case, the elementary sets $S_E$ (a triangle or a "cake slice" of a disc as depicted in figure 10) can be made so that it is of minimal area, and such that it "tiles" the allowed register space (its angle from the center of the disk must be a divisor of $2\pi$).

Another example of optimization of a different objective function could be to minimize the number of moves in a given rearranging algorithm. While the loading of the register is random, the moves to do to bring a misplaced particle to its desired positions depend on the geometry of the trap layout. One could adapt the above tiling procedure such that it maximizes some connectivity between the traps, allowing many different paths for moving particles.

The determination method comprises a step 130 of determining positions $P_T$ of trapping sites in the allowed register space $S_R$ on the basis of the determined particle positions $P_P$ so as to enable the trapping of particles at the determined particle positions $P_P$. The determination step 130 is for example implemented by the computer 20 interacting with the computer program product 22, that is to say is computer-implemented.

In an example of implementation, the number of trapping sites is equal to the number of particles. Hence, the positions of the trapping sites are set at the positions of the particles.

In another example of implementation, the number of trapping sites is greater than the number of particles. The determination step 130 comprises positioning one trapping site per particle at the determined position for the particle. Then, determining free space in the allowed register space $S_R$ after filling the allowed register space $S_R$ with round shapes centered on the determined particle positions $P_P$ and whose radius is the minimal distance $d_{min}$. The round shapes are disks for two dimensional registers and spheres for three dimensional registers. Then, the remaining trapping sites are positioned in the free space while updating the free space after the positioning of each trapping site.

Preferably, the remaining trapping sites are positioned on the basis of a k-means clustering algorithm, k being the number of remaining trapping sites. Such an algorithm is for example based on a Voronoi diagram when the number of trapping sites is two per particle.

More precisely, the Voronoi diagram of a set of points $\mathcal{P}$ = {P1, ..., Pn} is a partioning of the plane/space into cells. For $n$ points there are $n$ cells. The cell corresponding to a point $Pi$ consists in the set of points that are closer to $Pi$ than any other point $Pj, j \neq i$.

K-means clustering is a method of partitioning a set of $N = Card(P_P)$ points into $k$ clusters (or partitions), while minimizing, for each point of a given cluster, the distance to the cluster center (or centroid). Variation of the method can also produce clusters of equal size. The final result of the k-means method is a set of k points, the centroids. The clustering is given by the Voronoi diagram of these k points. Since this is a minimization problem, there are various numerical methods that can be also used when not exact k-means clustering is available. An example of such an algorithm is the Lloyd's algorithm.

In an example of embodiment using the principle of the K-means clustering algorithm, the operator specifies a number T of trapping sites per particle (input data), T being superior or equal to 1, preferably greater than 1. It corresponds to the inverse of the trapping efficiency of the quantum device.

The previous steps of the method have enabled to obtain a set of points, which form the particle positions $P_P$. Let $N = Card(P_P)$ be the number of particles that have to be placed in the register. Therefore, one should produce $N \times$ T trapping sites to successfully assemble the final set of particle positions $P_P$. Among this $N \times$ T trapping sites, $N$ of them should be placed at the particle positions $P_P$. This leaves us with $N \times (T - 1)$ trapping sites positions to determine. In order to layout these remaining trapping sites fairly between the particle positions $P_P$, we compute the k-means cluster of the set of particle positions $Pp$, with $k = (T - 1)$. We then place one trap per cell of the obtained k-means clustering (which is the Voronoi diagrams of the centroids), as close as possible to the centroid of the cell.

Preferably, the positioning of the remaining trapping sites is repeated until all the trapping sites have been positioned in the free space or until the free space does not allow the positioning of an additional trapping site.

Preferably, when the free space does not allow the positioning of an additional trapping site and there is at least one remaining trapping site, at least one tiling set $S_T$ is removed from the allowed register space $S_R$. This enables reducing the number of required particles and thus the number of trapping sites. If applicable, the positioning of the remaining trapping site is repeated with the updated remaining trapping site(s).

Optionally, the trapping sites are also positioned at a maximal distance from the corresponding particle position $P_P$. This enables to ease the rearrangement of particles, for example by an optical tweezer.

Hence, given a quantum register, the above method enables determining the placement of particles (for example Rydberg atoms) ensembles, and then of trapping sites, maximizing the number of ensembles in the quantum register while minimizing the interactions (for example Rydberg blockade) between the different ensembles. computations, or copies of a single quantum system.

Having multiple non-interacting particles ensembles allows for the parallelization of their quantum evolution.

This allows to reduce the number of run of sampling experiments, since each run allow to sample the final state several times. Hence, the above determination method enables rendering easier and more accurate the implementation of quantum computations in parallel.

In addition, a method for generating several quantum systems able to perform independent quantum calculations in parallel can also be implemented. Such a method comprises:

- the steps of the method for determining the positions $P_T$ of trapping sites as previously described.
- a step of generating trapping sites at the determined positions $P_T$ of the trapping sites in the quantum register. For example, the trapping sites are generated by at least one laser and an associated beam shaper.
- a step of loading and rearranging the particles in the trapping sites so as to obtain several quantum systems able to perform independent quantum calculations in parallel. The particles are for example loaded from a vacuum chamber. The rearrangement is for example performed by lasers.

In addition, a method for performing independent quantum calculations in parallel with several quantum systems generated according to the above generation method, can also be implemented.

Hence, the person skilled in the art will understand that the above methods are performed for a quantum processor, also called quantum computer.

A quantum processor is an array of qubits (also called a qubit register), as well as a hardware for manipulating these qubits. A quantum processor is adapted to perform quantum operations on qubits.

A quantum processor uses the quantum properties of matter, such as superposition and entanglement, to perform operations on data. Unlike a classical computer based on transistors working on binary data (coded on bits, 0 or 1), the quantum processor works on qubits whose quantum state can take a continuous rather than discrete number of values.

In particular, a qubit refers to a two-level quantum mechanical system. For example, a qubit comprises two basic quantum states I0> and I1> representing the possible quantum states of the qubit. According to the superposition principle of quantum mechanics, any superposition of the form aI0> + bI1> (a and b being complex numbers and aa*+bb*=1) is a possible quantum state of the qubit.

The quantum processor considered in the implementation of the above method comprises particles, such as neutral atoms, suitable to be manipulated and rearranged to form the qubits. The manipulations are typically performed by light beams, such as lasers.

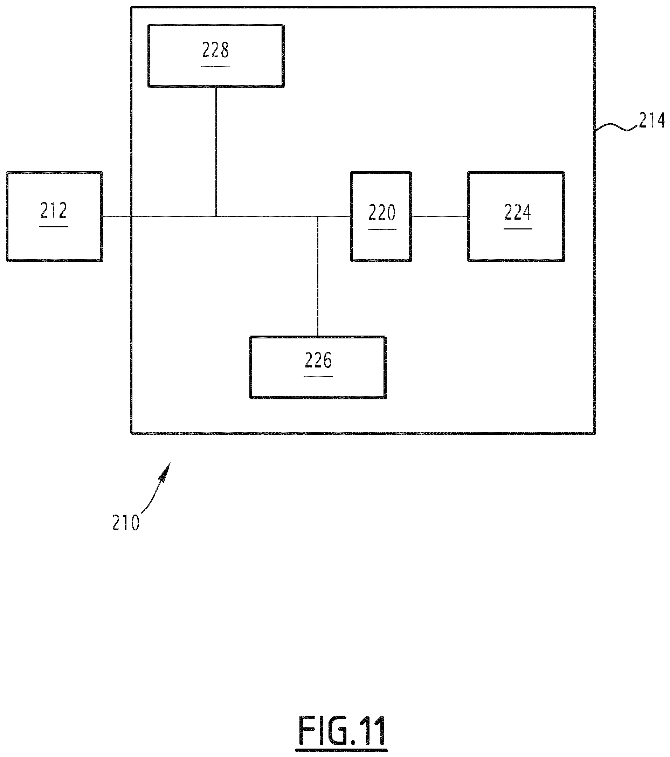

In the example illustrated in figure 11, the quantum processor 210 is a neutral atom quantum processor. Such a quantum processor 210 comprises a vacuum chamber 212 and a generator 214 of atom trapping sites.

The vacuum chamber 212 is an enclosure in which atoms are generated. In particular, the vacuum chamber 212 is placed under vacuum and comprises a dilute atomic vapor allowing the formation of the neutral atoms.

The atom trapping site generator 214 comprises a laser device 220 and a spatial light modulator 224. As illustrated in figure 11, the generator 214 also includes a rearranging device 226 and a display device 228.

The laser device 220 is adapted to generate a laser beam suitable for delivery into the vacuum chamber 212, possibly via an optical system.

The spatial light modulator 224 is adapted to impart a phase to the laser beam. The phase is adapted to be converted into an intensity pattern when the laser beam is in the vacuum chamber 212. The intensity pattern corresponds to atom trapping sites (optical tweezers).

Typically, the vacuum chamber 212 includes a lens suitable for focusing the laser beam and the intensity pattern is formed at the focal plane of the lens.

The rearranging device 226 is adapted to rearrange the atoms trapped in the trapping sites. The rearranging device 226 comprises, for example, an acousto-optic laser beam deflector (AOD) generating a laser beam suitable to be superimposed on the laser beam generated by the laser device 220, for example via a polarizing beam splitter (PBS).

The display device 228 is adapted to generate an image of the trapping sites, enabling any atoms trapped in the trapping sites to be viewed. The display device 228 comprises, for example, a dichroic mirror and a camera. The dichroic mirror is adapted to separate the fluorescent light emitted by the atoms trapped in the trapping sites from the light corresponding to the laser beams and to send this fluorescent light to the camera. The camera is able to generate an image based on the received fluorescent light.

The components of such a quantum processor with neutral atoms are, for example, detailed in paragraph 2 of the article by Loïc Henriet, Lucas Beguin, Adrien Signoles, Thierry Lahaye, Antoine Browaeys, Georges-Olivier Reymond, and Christophe Jurczak. Quantum computing with neutral atoms. Quantum, 4:327, September 2020. ISSN 2521-327X. doi:10.22331/q-2020-09-21-327.

The person skilled in the art will understand that the embodiments and variants described above in the description can all be combined provided that they are technically compatible. In particular, it is highlighted that the invention applies both for 2D and 3D configurations.

**Claims**

1. A method for determining the positions ($P_T$) of trapping sites for particles in a quantum register so as to enable generating several quantum systems able to perform independent quantum calculations in parallel, the method comprising the following steps which are computer-implemented:

   - obtaining input data comprising:

     ◦ an allowed register space ($S_R$),
     ◦ relative positions ($P_R$) of particles forming a particle pattern,
     ◦ a radius parameter ($\rho$),

   - determining particle positions ($P_P$) in the allowed register space ($S_R$) for forming several quantum systems able to perform independent quantum calculations in parallel, the determination step comprising:

     ◦ determining an elementary set ($S_E$) for the particle pattern, the determination of the elementary set ($S_E$) comprising:

       ▪ determining a round shape for each relative positions ($P_R$) of particles of the particle pattern on the basis of the radius parameter ($\rho$), each round shape being a disk or a sphere, the round shapes being centered on the corresponding position ($P_R$) and having a radius ($\rho$) equal to the radius parameter ($\rho$),
       ▪ determining an interaction geometry (G) which is the union of all the round shapes determined for the relative positions ($P_R$) of particles of the particle pattern,
       ▪ determining an approximated enclosing shape (S) of minimum area around the interaction geometry (G), the elementary set ($S_E$) being the relative positions ($P_R$) of particles forming the particle pattern enclosed in the determined enclosing shape (S),

     ◦ computing the particle positions ($P_P$) in the allowed register space ($S_R$), on the basis of the elementary set ($S_E$), so as to form several quantum systems able to perform independent quantum calculations in parallel,

   - determining positions ($P_T$) of trapping sites in the allowed register space ($S_R$) on the basis of the determined particle positions ($P_P$) so as to enable the trapping of particles at the determined particle positions ($P_P$).

2. A method according to claim 1, wherein the computing of the particle positions ($P_P$) comprises the determination of a tiling set ($S_T$) obtained by concatenating two elementary sets ($S_E$) which are symmetrical to each other by central symmetry, and filling the allowed register space ($S_R$) with as many tiling sets ($S_T$) as possible.

3. A method according to claim 2, wherein the filling of the allowed register space with as many tiling sets ($S_T$) as possible comprises arranging the tiling sets ($S_T$) next to each other to obtain an array (A) of tiling sets ($S_T$), and rotating and/or translating the array (A) of tiling sets ($S_T$) with respect to the shape of the allowed register space ($S_R$) so as to fill the allowed register space ($S_R$) with as many tiling sets ($S_T$) as possible.

4. A method according to claim 2 or 3, wherein a buffer zone (ZB) has been added around each elementary sets ($S_E$) concatenated to obtain the tiling set ($S_T$), so as to increase the distance between the particle positions ($P_P$) belonging to different elementary sets ($S_E$).

5. A method according to any one of claims 1 to 4, wherein the input data also comprises:

     ◦ a number T of trapping site(s) per particle, T being superior or equal to one,
     ◦ a minimal distance ($d_{min}$) between two trapping sites,
     the determination of the positions ($P_T$) of the trapping sites comprising:

     ◦ positioning a trapping site at each determined particle position ($P_P$),
     ◦ determining free space in the allowed register space ($S_R$) after filling the allowed register space ($S_R$) with round shapes centered on the determined particle positions ($P_P$) and whose radius is the minimal distance ($d_{min}$), each round shape being a disk or a sphere, and
     ◦ positioning the remaining trapping sites in the free space while updating the free space after the positioning of each trapping site.

6. A method according to claim 5, wherein the remaining trapping sites are positioned on the basis of a K-means clustering algorithm so as to position one remaining trapping site per Voronoi cell of the computed K-means clustering, as close as possible to the centroid of the corresponding Voronoi cell.

7. A method according to claim 5 or 6, wherein the positioning of the remaining trapping sites is repeated until all the trapping sites have been positioned in the free space or until the free space does not allow the positioning of an additional trapping site.

8. A method according to claim 7, wherein when the free space does not allow the positioning of an additional trapping site and there is at least one remaining trapping site, at least one tiling set ($S_T$) is removed from the allowed register space ($S_R$), enabling to reduce the requested number of trapping sites.

9. A method according to any one of claims 1 to 8, wherein the particles are any particles undergoing effective two-body isotropic interactions, the particles being preferably neutral atoms, such as Rubidium atoms or Strontium atoms.

10. A method according to any one of claims 1 to 9, wherein the radius parameter ($\rho$) is a distance parameter capturing an effective two-body isotropic typical interaction range, preferably the interaction range being relative to a Van der Wall interaction.

11. A method for generating several quantum systems able to perform independent quantum calculations in parallel, the method comprising the steps of the method for determining the positions ($P_T$) of trapping sites according to any one of claims 1 to 10 and the following steps :

   - generating trapping sites at the determined positions ($P_T$) of the trapping sites in the quantum register, and
   - loading and rearranging the particles in the trapping sites so as to obtain several quantum systems able to perform independent quantum calculations in parallel.

12. A method for performing independent quantum calculations in parallel with several quantum systems generated according to the generation method of claim 11.

13. A computer program product comprising a readable information carrier having stored thereon a computer program comprising program instructions, the computer program being loadable onto a data processing unit and causing a method according to any one of claims 1 to 10 to be carried out when the computer program is carried out on the data processing unit.

14. A readable information carrier on which a computer program product according to claim 13 is stored.

FIG.1

```
┌─────────────────┐
│      -110-      │
└─────────────────┘
          │
          ▼
┌─────────────────┐
│      -120-      │
└─────────────────┘
          │
          ▼
┌─────────────────┐
│      -130-      │
└─────────────────┘
```

# FIG.2

G

P

P

ρ

P

## FIG.3

# FIG.4

FIG.5

## FIG.6

FIG.7

FIG.8

## FIG.9

## FIG.10

FIG.11

Europäisches
Patentamt

European
Patent Office

Office européen
des brevets

# EUROPEAN SEARCH REPORT

Application Number

EP 23 30 5360

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | T. PATEL ET AL: "Geyser a compilation framework for quantum computing with neutral atoms", PROCEEDINGS OF THE 49TH ANNUAL INTERNATIONAL SYMPOSIUM ON COMPUTER ARCHITECTURE (ISCA'22), 11 June 2022 (2022-06-11), pages 383-395, XP058767733, DOI: 10.1145/3470496.3527428 * sections 2 and 3 * | 1-14 | INV. G06N10/40 ADD. G06N10/20 G06N20/00 |
| A | EP 3 996 007 A1 (INST DOPTIQUE THEORIQUE ET APPLIQUEE [FR]) 11 May 2022 (2022-05-11) * figure 4; paragraph 105ff * | 1-14 | |
| A | B. TAN ET AL: "Qubit mapping for reconfigurable atom arrays", PROCEEDINGS OF THE 41ST IEEE/ACM INTERNATIONAL CONFERENCE ON COMPUTER-AIDED DESIGN (ICCAD'22), 107, 30 October 2022 (2022-10-30), XP059035500, DOI: 10.1145/3508352.3549331 * sections 3-5 * | 1-14 | |
| A | B. CIMRING ET AL: "Efficient algorithms to solve atom reconfiguration problems. I. The redistribution-reconfiguration (red-rec) algorithm", ARXIV.ORG, CORNELL UNIVERSITY LIBRARY, 201 OLIN LIBRARY CORNELL UNIVERSITY ITHACA, NY 14853, 7 December 2022 (2022-12-07), XP091389176, DOI: 10.48550/arXiv.2212.03885 * sections II and III * | 1-14 | TECHNICAL FIELDS SEARCHED (IPC) G06N G21K |

-/--

The present search report has been drawn up for all claims

| Place of search | Date of completion of the search | Examiner |
|---|---|---|
| The Hague | 22 June 2023 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | R. EL SABEH ET AL: "Efficient algorithms to solve atom reconfiguration problems. II. The assignment-rerouting-ordering (aro) algorithm", ARXIV.ORG, CORNELL UNIVERSITY LIBRARY, 201 OLIN LIBRARY CORNELL UNIVERSITY ITHACA, NY 14853, 11 December 2022 (2022-12-11), XP091392054, DOI: 10.48550/arXiv.2212.05586 * sections II-IV * ----- | 1-14 | |

TECHNICAL FIELDS
SEARCHED      (IPC)

The present search report has been drawn up for all claims

| Place of search | Date of completion of the search | Examiner |
|---|---|---|
| The Hague | 22 June 2023 | Douarche, Nicolas |

CATEGORY OF CITED DOCUMENTS

X : particularly relevant if taken alone
Y : particularly relevant if combined with another
　　document of the same category
A : technological background
O : non-written disclosure
P : intermediate document

T : theory or principle underlying the invention
E : earlier patent document, but published on, or
　　after the filing date
D : document cited in the application
L : document cited for other reasons

& : member of the same patent family, corresponding
　　document

EPO FORM 1503 03.82 (P04C01)

**ANNEX TO THE EUROPEAN SEARCH REPORT
ON EUROPEAN PATENT APPLICATION NO.**

EP 23 30 5360

This annex lists the patent family members relating to the patent documents cited in the above-mentioned European search report.
The members are as contained in the European Patent Office EDP file on
The European Patent Office is in no way liable for these particulars which are merely given for the purpose of information.

22-06-2023

| Patent document cited in search report | | Publication date | Patent family member(s) | | Publication date |
|---|---|---|---|---|---|
| EP 3996007 | A1 | 11-05-2022 | CA | 3201431 A1 | 19-05-2022 |
| | | | EP | 3996007 A1 | 11-05-2022 |
| | | | WO | 2022101145 A1 | 19-05-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LOÏC HENRIET ; LUCAS BEGUIN ; ADRIEN SIGNOLES ; THIERRY LAHAYE ; ANTOINE BROWAEYS ; GEORGES-OLIVIER REYMOND ; CHRISTOPHE JURCZAK.** Quantum computing with neutral atoms. *Quantum,* September 2020, vol. 4, ISSN 2521-327X, 327
- **ALOK AGGARWAL ; J. S. CHANG ; CHEE K. YAP.** Minimum area circumscribing Polygons. *The Visual Computer,* August 1985, vol. 1 (2), ISSN 1432-2315, 112-117

- **LOÏC HENRIET ; LUCAS BEGUIN ; ADRIEN SIGNOLES ; THIERRY LAHAYE ; ANTOINE BROWAEYS ; GEORGES-OLIVIER REYMOND ; CHRISTOPHE JURCZAK.** Quantum computing with neutral atoms. *Quantum,* September 2020, vol. 4, ISSN 2521-327X, 327